# EUROPEAN PATENT SPECIFICATION

(11) **EP 4 479 900 B1**
(45) Date of publication and mention of the grant of the patent: **27.05.2026**
(21) Application number: 23723154.3
(22) Date of filing: 25.04.2023
(51) Int. Cl.: G06N 20/00, G05B 13/02, G05B 23/02

(54) **GENERATING TRAINING DATA TO TRAIN A MACHINE LEARNING MODEL APPLIED FOR CONTROLLING A PRODUCTION PROCESS**
ERZEUGUNG VON TRAININGSDATEN ZUM TRAINIEREN EINES MASCHINENLERNMODELLS ZUR STEUERUNG EINES PRODUKTIONSVERFAHRENS
GÉNÉRATION DE DONNÉES D'APPRENTISSAGE POUR ENTRAÎNER UN MODÈLE D'APPRENTISSAGE AUTOMATIQUE APPLIQUÉ AU CONTRÔLE D'UN PROCÉDÉ DE PRODUCTION

(30) Priority: 13.05.2022 EP 22173233
(43) Date of publication of application: 25.12.2024
(73) Proprietor: Siemens Aktiengesellschaft, 80333 München (DE)
(72) Inventor: FRIKHA, Ahmed, 81549 München (DE); CHEN, Haokun, 81549 München (DE); KROMPASS, Denis, 85591 Vaterstetten (DE)
(74) Representative: Siemens Patent Attorneys
(86) International application number: PCT/EP2023/060775
(87) International publication number: WO 2023/217525

(56) References cited:
- WO-A1-2021/080577
- US-A1- 2021 272 014
- YANLIN ZHOU ET AL: "Distilled One-Shot Federated Learning", ARXIV.ORG, CORNELL UNIVERSITY LIBRARY, 201 OLIN LIBRARY CORNELL UNIVERSITY ITHACA, NY 14853, 26 October 2020 (2020-10-26), XP081800109
- JACK GOETZ ET AL: "Federated Learning via Synthetic Data", ARXIV.ORG, CORNELL UNIVERSITY LIBRARY, 201 OLIN LIBRARY CORNELL UNIVERSITY ITHACA, NY 14853, 26 September 2020 (2020-09-26), XP081771939
- MA SHIYAO ET AL: "Privacy-Preserving Anomaly Detection in Cloud Manufacturing Via Federated Transformer", IEEE TRANSACTIONS ON INDUSTRIAL INFORMATICS, IEEE SERVICE CENTER, NEW YORK, NY, US, vol. 18, no. 12, 13 April 2022 (2022-04-13), pages 8977 - 8987, XP011921627, ISSN: 1551-3203, [retrieved on 20220414], DOI: 10.1109/TII.2022.3167478
- YI LIU ET AL: "A Systematic Literature Review on Federated Learning: From A Model Quality Perspective", ARXIV.ORG, CORNELL UNIVERSITY LIBRARY, 201 OLIN LIBRARY CORNELL UNIVERSITY ITHACA, NY 14853, 1 December 2020 (2020-12-01), XP081828970

## Description

The present disclosure relates to a computer-implemented method for generating training data to train a machine learning model used for a classification task in a production process for manufacturing at least one workpiece and/or product and a corresponding system. Further, the disclosure relates to a corresponding computer-implemented method for controlling a production process and a computer program product.

Artificial Intelligence ("AI") systems, such as machine learning models, are known from the prior art. The machine learning models are software programs whose behavior is learned from data instead of being explicitly programmed. The learning process is called "training" which requires plenty of data and significant computational resources. Thereby, the trained machine learning model solves a specific task for which it was trained, such as prediction of machine or process properties. Unlike conventional software, the learned behavior of the machine learning models highly depends on the data including parameters used during training, namely training data.

In industrial manufacturing there exist a high diversity of manufacturing scenarios. For example, for the same production process there can be used different machine types from many machine manufacturers. The same or similar production process may be performed in different production sites with different settings of the machines. Similarly, the wear of the tooling of the different machines as well as other production-related factors, e.g., changes in the manufacturing process, influence the distribution of the collected data. In result, the distribution of data recorded from the different machines can differ. Such shifts in the data distributions typically lead to a degradation of the performance of the machine learning model developed for a certain production process.

Even more, while machine learning models perform well on in-domain data, i.e., data similar to the dataset they were trained with, e.g., data from the same production processes, operated with a same machine but from another manufacturer, they fail to generalize to out-of-domain data incurred by strong distribution shift, e.g., data from another production processes operated with the same machine. The distribution shift problem is also addressed by collecting data from the new distribution, e.g., from the new manufacturing machine, and labelling it, before training a new ML model or finetuning an existing ML model on it. This method has two drawbacks. First, in most cases only few labelled data are available, which are sampled randomly. The few data samples of a new unseen manufacturing scenario used to customize the adaptive learning model or even more used to customize an untrained learning model leads to a moderate performance of the model.

WO 2021/080577 A1 discloses systems implementing federated learning performing the following actions in each of a plurality of rounds of model optimization: a set of one or more clients are selected; each client in the set obtains information descriptive of a global version of a model from the server; each client in the set updates the model based on their local data; the updated models or model updates are sent by each client to the server; the server aggregates the updates and improves the global model.

US 2021/0272014 A1 discloses that data samples are transmitted from a central server to at least one local server apparatus. The central server receives a set of predictions from the at least one local server apparatus that are based on the transmitted set of data samples.

MA SHIYAO ET AL: "Privacy-Preserving Anomaly Detection in Cloud Manufacturing Via Federated Transformer", IEEE TRANSACTIONS ON INDUSTRIAL INFORMATICS, IEEE SERVICE CENTER, NEW YORK, NY, US, vol. 18, no. 12, 13 April 2022 (2022-04-13), pages 8977-8987, ISSN: 1551-3203, DOI: 10.1109/Tll.2022.3167478 discloses a federated learning-based transformer framework to deal with the anomaly detection problem in cloud manufacturing.

YI LIU ET AL: "A Systematic Literature Review on Federated Learning: From A Model Quality Perspective", ARXIV.ORG, CORNELL UNIVERSITY LIBRARY, 201 OLIN LIBRARY CORNELL UNIVERSITY ITHACA, NY 14853, 1 December 2020 (2020-12-01), reviews and objectively analyzes federated learning approaches to improving the quality of federated learning models.

YANLIN ZHOU ET AL: "Distilled One-Shot Federated Learning", ARXIV.ORG, CORNELL UNIVERSITY LIBRARY, 201 OLIN LIBRARY CORNELL UNIVERSITY ITHACA, NY 14853, 26 October 2020 (2020-10-26), discloses Distilled One-Shot Federated Leaming to reduce the number of communication rounds required to train a performant model to only one.

JACK GOETZ ET AL: "Federated Learning via Synthetic Data", ARXIV.ORG, CORNELL UNIVERSITY LIBRARY, 201 OLIN LIBRARY CORNELL UNIVERSITY ITHACA, NY 14853, 26 September 2020 (2020-09-26), discloses a method for federated learning where instead of transmitting a gradient update back to the server, a small amount of synthetic 'data' is transmitted.

One approach to generalize a machine learning model to unseen out-of-domain data is to train the ML model on data from different manufacturing conditions, e.g., different machine types. This would allow to directly use this ML model on unseen data collected by unknown machine types without requiring any labelling or retraining. The problem here is, that data owners, e.g., manufacturing companies are unwilling to share their data in order to preserve data-privacy and know-how, and possibly prevent reverse engineering. Such an approach accelerates the development of ML models, but usually requires high data transfer to the different data sources.

Therefore, it is the object of the present application to train the ML model on data from different manufacturing conditions, in such a way to directly use this model on unseen data collected by unknown production processes, e.g., using unknown machine types, without requiring any labelling or retraining in a fast and low memory consuming way while preserving the data-privacy.

This object is solved by the features of the independent claims. The dependent claims contain further developments of the invention.

A first aspect concerns a computer-implemented method for generating training data to train a machine learning model used for a classification task in a production process for manufacturing at least one workpiece and/or product, comprising:
a. on a central server, generating a central dataset comprising synthetic datapoints encoding values for a set of features and for a label assigned to each set of features, wherein the feature of the datapoint is a parameter measured on at least one machine performing the production process (13.1, 13.2, 13.k, 13.n) or a parameter measured on at least one workpiece and/or product manufactured by the production process,
   wherein the label indicates a class characterizing the production process or the machine performing the production process, or the workpiece manufactured by the production process at the time the datapoint was recorded,
b. transferring a copy of the central dataset to several local servers, wherein each local server stores a process-specific dataset collected at a local production process out of several local production processes, and the collected datasets of the local production processes having different data distributions,
c. at each of the local servers, optimizing the features and/or labels of every datapoint of the copy of the central dataset by encoding knowledge contained in its process-specific dataset into the features and/or labels of every datapoint resulting in a process-specific current distilled dataset, wherein the optimizing is performed by inputting the process-specific dataset (PD1, PD2, PDk) and the copy of the central dataset (CD) into a dataset distillation algorithm, and wherein the encoding is performed by inputting the process-specific dataset and the copy of the central dataset (CD) into a dataset distillation algorithm, which outputs the process-specific current distilled dataset,
d. at the central server, receiving a copy of the process-specific current distilled datasets from at least a subset of the local servers and aggregating all current distilled datasets into a process-agnostic distilled aggregated central dataset,
e. iterating the steps b-d by applying the aggregated central dataset as central dataset until a terminating criterion is met, wherein the terminating criteria is one of a predefined convergence criterion, a predefined number of iterations, a predefined time limit,
f. providing the resulting aggregated central dataset as output and using it as input for training the machine learning model for the production process.

The proposed method applies a federated learning approach on a dataset level instead of a model level. This is achieved by optimizing a set of synthetic datapoints instead of optimizing a machine learning model. By using the federated learning setting, the proposed method does not need direct access to the data of the different production processes, i.e., data domains, where each owner of the production process stores their private data on a local server. These local servers communicate with a central server that aggregates the information received from the different local servers in a secure manner, e.g., by aggregating them. Therefore, the proposed method preserves data-privacy.

The disadvantage of federated learning, i.e., sending a large dataset between the central server and each of local would be computationally expensive is overcome by encoding knowledge contained in its process-specific dataset into the features and/or labels of every datapoint resulting in a process-specific current distilled dataset. The distilled dataset has reduced size compared to the process-specific dataset. Therefore, the volume of data transferred on each iteration is significantly reduced. The distilled dataset synthesizes a small number of data points that do not need to come from the correct data distribution, but will, when given to the machine learning model as training data, approximate the model trained on the original data.

Thus, the proposed method generates a distilled dataset, i.e., a small dataset that encodes the task knowledge, by incorporating a dataset distillation method. This method reduces costs and time since the new proposed method is faster and has a lower memory footprint.

In an embodiment the production process is a new production process, which is similar to the local production processes.

Similar means here, that the data collected at the new production process and the data collected at the local production processes have different distributions. E.g., the new process is performed by the same machine as in the local production process but manufactures another product and therefore data with a different data distribution is collected at the new process. Another example, the new production process manufactures the same product but applying a machine of another machine manufacturer, such that the data collected at the new production process have a different to that of the local production process.

In an embodiment the production process is one of the local production processes.

Using the resulting aggregated central dataset as input for training the machine learning model for the local production process results in an updated ML model for the local production process which provides better results even if the wear of the tooling has changed during operation time or a tool has been replaced by another tool.

In an embodiment the training is performed using the resulting aggregated central dataset and the process-specific dataset of the local process on the local server.

Such a combination of datasets for training the local production process emphasises the information on the specific features of the local production process in relation to the process-agnostic features in the resulting aggregated central dataset which optimizes the resulting trained ML model of the local production process.

In an embodiment the initial central dataset comprises datapoints of random values or comprises of a dataset of any of the local production processes or the production process or a distilled dataset of a subset of the local production processes.

This allows a variety of different starting datasets. A random dataset provides a uniform and unbiased data distribution with respect to the local or new production process. Applying a dataset of any of the local production processes or the production process or a distilled dataset accelerates to reach the termination criterion.

According to the invention the optimizing is performed by inputting the process-specific dataset and the copy of the central dataset into a dataset distillation algorithm.

Transferring a large dataset between a central server and each of the local servers would be computationally expensive. Optimizing the dataset by a dataset distillation algorithm reduces the amount of data which has to be sent and therefore reduces data transfer cost and reduces processing capacity in the local server and central server.

In an embodiment the aggregating is performed by averaging the features and/or labels of all current distilled datasets resulting in the aggregated central dataset.

The aggregated dataset alone does not reveal any information about the process-specific datasets of the different local production processes. The aggregation of the client-specific distilled datasets each of which is biased towards a specific data domain / production process yields a dataset that is domain-agnostic, i.e., is not biased towards a specific domain / production process.

In a further embodiment the feature of a datapoint is a parameter measured on at least one machine performing the production process or a parameter measured on at least one workpiece and/or product manufactured by the production process.

In an embodiment the feature of the datapoint comprises information of a feature map of an image of the production process.

The feature map of an image provides the information which is most distinguishing for object on the image. Datapoints comprising only the information of a feature map is of reduced volume compared to a dataset encoding the complete image.

In an embodiment the process-specific dataset of each local production process is private data, and the private data is not transferred to the central server.

In an embodiment the production processes are one of an additive manufacturing process or a milling process, and the classification task is one of anomaly detection, failure classification, condition monitoring of a machine in the production process, or a quality control, product sorting of the workpiece and/or product manufactured in the production processes.

In an embodiment the computer-implemented method comprises:
- training the machine learning model to perform the classification task in the production process with the aggregated central dataset generated according to claims 1-9,
- inputting datapoints collected during the production process into the trained machine learning model,
- outputting a classification result of the production process from the trained machine learning model depending on the input datapoints, and
- controlling the production process depending on the classification result.

The machine learning model trained by the aggregated central dataset provides a high performance with respect to the quality of the classification result without or with only few training data of the production process it is applied to. The high performance of the trained ML model and accuracy of the output classification result, e.g., failure class of the product, e.g., to adapt the parameter setting of the production process and/or the machine performing the production process.

The trained ML model has not only a high domain generalization ability but uses the aggregated central dataset which is a distilled cross-domain dataset that encodes the knowledge contained in process-specific dataset from the different local production processes that were used for training. This aggregated central dataset can be useful to reduce engineering efforts for the development of different data-driven applications beyond the task at hand, e.g., applications that require continual learning properties or neural architecture search. The advantage is cost reduction and/or performance increase via the reuse of the distilled cross-domain dataset, i.e., the aggregated central dataset.

In an embodiment the classification task is one of anomaly detection, failure classification, condition monitoring of a machine in the production process, or a quality control, product sorting of the workpiece and/or product manufactured in the production processes.

A second aspect concerns a system for generating training data to train a machine learning model applied for a classification task in a production process for manufacturing at least one workpiece and/or product, as defined in claim 12.

The system provides the aggregated central dataset for training the ML method in a fast, processing capacity and data bandwidth efficient way.

A third aspect concerns a computer program product directly loadable into the internal memory of a digital computer, comprising software code portions for performing the steps as described before, when said product is run on said digital computer.

The computer program product can be provided by a computer readable memorv medium having computer program instructions stored thereon, which perform the steps of the method according to the preceding claims when executed by a processor.

The invention will be explained in more detail by reference to accompanying figures. Similar objects will be marked by the same reference signs.
- Figure 1: schematically illustrates an embodiment of the inventive system.
- Figure 2: shows an embodiment of the inventive method for generating training data illustrated by a schematic information flow diagram.
- Figure 3: shows an embodiment of the inventive method for controlling a production process illustrated by a schematic information flow diagram.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional blocks, devices, components or other physical or functional elements could also be implemented by an indirect connection or coupling, e.g., via one or more intermediate elements. A connection or a coupling of elements or components or nodes can for example be implemented by a wire-based, a wireless connection and/or a combination of a wire-based and a wireless connection. Functional units can be implemented by dedicated hardware, e.g., processor or firmware, and/or by a combination of dedicated hardware and firmware and software. It is further noted that each functional step of the method can be performed at a functional unit on the related system.

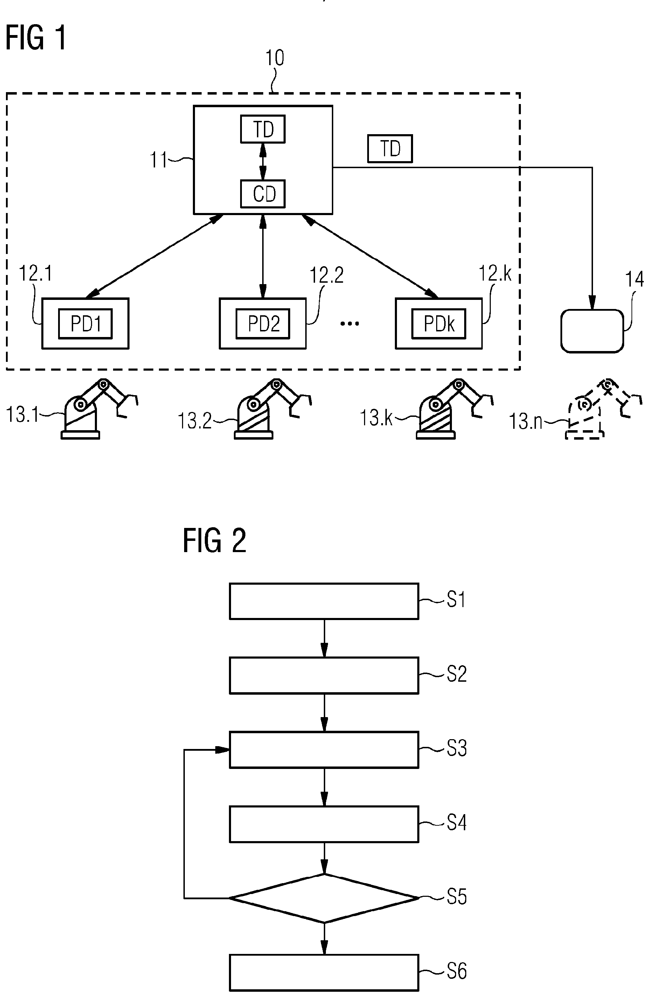

Figure 1 shows a system 10 which is configured to perform the inventive method, i.e., to generate training data TD to train a machine learning model 14 used for a classification task in a production process 13.n for manufacturing at least one workpiece and/or product.

The system 10 comprises of one central server 11 and several local servers 12.1, 12.2, 12.k. Each of the local servers 12.1, 12.2, 12.k comprises a data interface to communicate with the central server 10 and a storage unit that stores a process-specific dataset PD1, PD2, PDk collected at a local production process 13.1, 13.2, 13.k. The process-specific dataset PD1, PD2, PDk of each local production process 13.1, 13.2, 13.k is private data, i.e., owned by different customers, and the private data as such is not transferred to the central server 11 throughout the method steps performed by the system.

In industrial manufacturing there exist a high diversity of manufacturing scenarios. For example, in a production process there can be used different machine types from many machine manufacturers. Local production processes are such variations of the production process. Data collected from the several local production processes have different data distributions. Data or collected data from the local production process 13.1, 13.2, 13.k are sensor data recorded over time by sensors measuring physical parameters, e.g., torque, rotation speed, temperature, pressure, voltage and the same, during a production process or image data from the work piece captured by a camera.

A datapoint of the dataset comprises a feature and a label assigned to the feature. The feature comprises a set of different sensor data measured at a certain point in time or period of time. The label indicates a class characterizing the production process or the machine performing the production process, or the workpiece manufactured by the production process at the time the datapoint was recorded. Examples of classes are normal/failure mode, maintenance required mode related or failure A, failure B, failure C of the. Labelling or labelled data is used as synonym for annotating or annotated data in this description.

The central server 11 is configured to generate in an initial step a central dataset CD comprising synthetic datapoints. In a federated learning approach performed in cooperation of the central server and the several local servers the synthetic datapoints are iteratively optimized and finally the central server 11 outputs an aggregated central dataset TD, which is used as training data to train a machine learning model 14 applied for a classification task in a production process 13.n for manufacturing at least one workpiece and/or product.

The local production processes 13.1, 13.2, 13.k as well as the production process 13.n for which a ML model shall be trained are processes at which datasets are collected which are of the same structure, but which show a different data distribution. The local production processes 13.1, 13.2, 13.k as well as the production process 13.n are preferably one of an additive manufacturing process or a milling process. The classification task is one of anomaly detection, failure classification, condition monitoring of a machine in the production process, or a quality control, product sorting of the workpiece and/or product manufactured in the production processes.

An embodiment of the inventive method which is performed by the central server 11 and each of the local servers 12.1, 12.2, 12.k is illustrated in Figure 2 and comprises the following steps.

In a first step S1, the central dataset CD is generated by the central server 11. The central dataset CD comprises synthetic datapoints encoding values for a set of features and for a label assigned to each set of features. The central dataset CD comprises datapoints of random values or a dataset of any of the local production processes or the production process or a distilled dataset of a subset of the local production processes PD1, PD2, PDk.

In the next step S2, a copy of the central dataset DS is transferred to each of the local servers 12.1, 12.2, 12.k. At each of the local servers 12.1, 12.2, 12.k, the features and/or labels of every datapoint of the copy of the central dataset CD are optimized by encoding knowledge contained in its process-specific dataset PD1, PD2, PDk into the features and/or labels of every datapoint resulting in a process-specific current distilled dataset, see step S3. The optimizing is performed by inputting the process-specific dataset and the copy of the central dataset CD into a dataset distillation algorithm, which outputs the process-specific current distilled dataset. Examples of possible dataset distillation algorithms and techniques are published under
https://arxiv.org/abs/1811.10959,
https://arxiv.org/abs/2006.05929,
https://arxiv.org/abs/2110.04181 or
https://arxiv.org/abs/2107.13034

In a variant only the features of the process-specific dataset PD1, PD2, PDk are optimized, and the labels remain unchanged. The feature of a datapoint is a parameter measured on at least one machine performing the production process or a parameter measured on at least one workpiece and/or product manufactured by the production process. The feature of the datapoint can encode a feature map of an image, which provides the information which is most distinguishing for object on the image. The current distilled dataset is sent back from each of the local servers 12.1, 12.2, 12.k to the central server 11.

The central server 11 receives a copy of the process-specific current distilled datasets from each of the local servers 12.1, 12.2, 12.k and aggregates all distilled datasets into a process-agnostic and distilled aggregated central dataset, see step S4. Preferably, the aggregating is performed by averaging the features and/or labels of all current distilled datasets resulting in the aggregated central dataset. The aggregation of the process-specific distilled datasets, each of which is biased towards a specific data domain, yields a dataset that is domain-agnostic, i.e., is not biased towards a specific production process.

In step S5 the current aggregated central dataset is compared to a terminating criterion and further communication rounds are conducted until a terminating criterion is met. The terminating criteria can be one of a predefined convergence criterion, a predefined number of iterations, a predefined time limit and the like. If the terminating criterion is not matched, the aggregated central dataset is applied as central dataset and the steps S2 to S4 are performed again. I.e., in each round a copy of the previous central dataset is substituted by the current distilled aggregated central dataset and sent from the central server 11 to each of the local servers 12.1, 12.2, 12.k. The data distillation algorithm optimizes the distilled aggregated central dataset with the process-specific dataset PD1, PD2, PDk resulting in a "new" current distilled aggregated central dataset. The "new" current distilled aggregated central datasets are sent back from the local servers 12.1, 12.2, 12.k to the central server 11, which aggregates all "new" current distilled datasets into a process-agnostic and "new" distilled aggregated central dataset. If the "new" distilled aggregated central dataset complies the terminating criterion at step S5 the "new" current distilled aggregated central dataset is output and used as input for training the machine learning model 14 for the production process 13.n.

An algorithm of this method is illustrated in pseudo code as follows. Here, a scenario is considered where each different manufacturing condition is a manufacturing machine with a different type that generates data from a specific domain and saves it on a client k, which is the local server k. In the pseudocode, N denotes the number of the training iterations and *N_{Com}* the number of communication rounds.

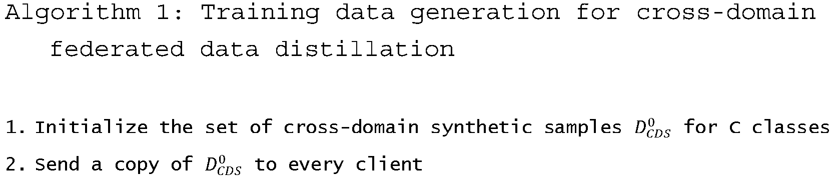

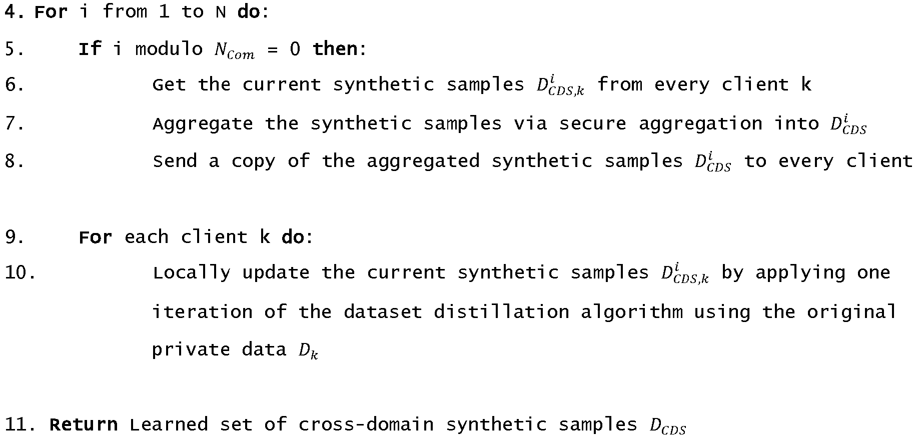

In step 10, a dataset distillation algorithm is applied. In the following we provide the pseudo code for a simple and high performing dataset distillation algorithm that was published recently (https://arxiv.org/pdf/2110.04181.pdf).

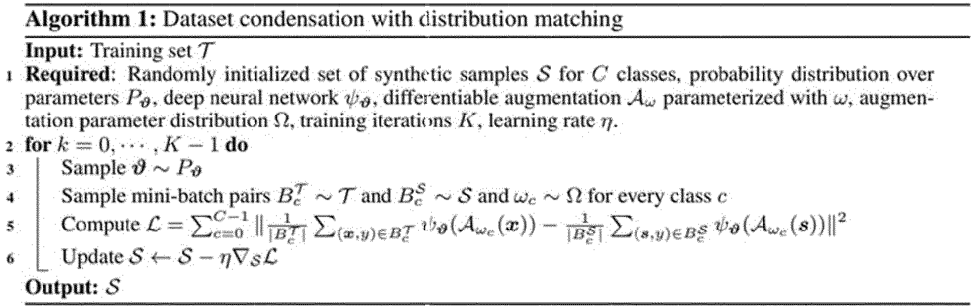

After the convergence of the method in step S5, i.e., the optimization/learning of the resulting aggregated central dataset TD, which is a distilled cross-domain dataset, this resulting aggregated central dataset TD is used to train the ML model for the production process 14, see step S6.

The production process can be a new production process, which is similar to the local production processes. Alternatively, the production process is one of the local production processes 13.1, 13.2, 13.k, wherein the training is performed using the resulting distilled aggregated central dataset TD and the process-specific dataset PD1, PD2, PDk of the local process 13.1, 13.2, 13.k on the local server 12.1, 12.2, 12.k.

The output of the described method is not only the resulting aggregated central dataset TD but also the trained ML model using the resulting aggregated central dataset as training data. The machine learning model can be a deep learning model, e.g., a deep autoencoder. But the generated distilled aggregated central dataset can be used to train any machine learning model including SVM, decision trees, boosting methods, and furthermore.

In fact, this resulting distilled aggregated central dataset TD encompasses task-related knowledge from different data domains and can therefore be used during the development of other data-driven application beyond the task at hand. Examples of other applications of related tasks include pre-training of a deep learning model, continual learning, neural architecture search and hyperparameter tuning.

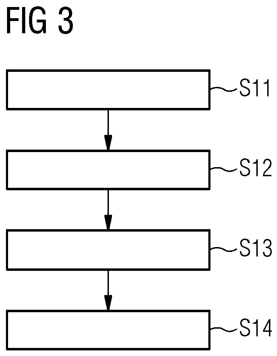

Another aspect of the invention concerns a method for controlling a production process for manufacturing at least one workpiece and/or product. The ML model and the production process are those as describe above and illustrated in Fig. 1 and Fig.2. This method is illustrated by an information flow diagram in Fig. 3.

In a first step S11 of the method a machine learning model 14 is trained to perform a classification task in the production process 13.n with an aggregated central dataset generated by the method as described above, see also Fig.2. In a second step S12 datapoints collected during the production process 13.n are input into the trained machine learning model 14, which outputs a classification result of the production process 13.n depending on the input datapoints, see step S13.

Subsequently the production process is controlled depending on the classification result.

In order to apply our method to a new production process 13.n, it is assumed that its collected data contains the same features as the process-specific datasets. In industrial manufacturing, these features are usually recorded using a reasonable set of sensors (including cameras), which measures for example the torques of the various axes in a milling machine, as well as control deviations. The collected dataset has to be annotated and pre-processed with the same preprocessing steps applied to the process-specific datasets present on the local servers, which was used for dataset distillation. The model application in a new manufacturing scenario consists in deploying the trained ML model, see step S6, in production mode, i.e., it directly makes predictions on the live data. The live data from, e.g., the new machine type Mi. A classifier model is initialized with the domain-agnostic parameters θ^* found during model training, see step S6. Class probabilities for the live data are predict with the model θ^*.

It is to be understood that the above description of examples is intended to be illustrative and that the illustrated components are susceptible to various modifications. For example, the illustrated concepts could be applied for different technical systems and especially for different subtypes of the respective technical system with only minor adaptions.

## Claims

1. Computer-implemented method for generating training data to train a machine learning model (14) used for a classification task in a production process (13.n) for manufacturing at least one workpiece and/or product, comprising:
a. on a central server (11), generating (S1) a central dataset (CD) comprising synthetic datapoints encoding values for a set of features and for a label assigned to each set of features,
wherein the feature of the datapoint is a parameter measured on at least one machine performing the production process (13.1, 13.2, 13.k, 13.n) or a parameter measured on at least one workpiece and/or product manufactured by the production process,
wherein the label indicates a class characterizing the production process or the machine performing the production process, or the workpiece manufactured by the production process at the time the datapoint was recorded,
b. transferring (S2) a copy of the central dataset (CD) to several local servers (12.1, 12.2, 12.k), wherein each local server (12.1, 12.2, 12.k) stores a process-specific dataset (PD1, PD2, PDk) collected at a local production process (13.1, 13.2, 13.k) out of several local production processes, and the collected datasets (PD1, PD2, PDk) of the local production processes having different data distributions,
c. at each of the local servers (12.1, 12.2, 12.k),
optimizing (S3) the features and/or labels of every datapoint of the copy of the central dataset (CD) by encoding knowledge contained in its process-specific dataset (PD1, PD2, PDk) into the features and/or labels of every datapoint resulting in a process-specific current distilled dataset,
wherein the optimizing is performed by inputting the process-specific dataset (PD1, PD2, PDk) and the copy of the central dataset (CD) into a dataset distillation algorithm, and wherein the encoding is performed by inputting the process-specific dataset and the copy of the central dataset (CD) into a dataset distillation algorithm, which outputs the process-specific current distilled dataset,
d. at the central server (11), receiving (S4) a copy of the process-specific current distilled datasets from at least a subset of the local servers (12.1, 12.2, 12.k) (12.1, 12.2, 12.k) and aggregating all current distilled datasets into a process-agnostic and distilled aggregated central dataset,
e. iterating (S5) the steps b-d by applying the distilled aggregated central dataset as central dataset until a terminating criterion is met,
wherein the terminating criteria is one of a predefined convergence criterion, a predefined number of iterations, a predefined time limit,
f. providing (S6) the resulting aggregated central dataset (TD) as output and using it as input for training the machine learning model (14) for the production process (13.n).

2. Method according to claim 1, wherein the production process (13.n) is a new production process, which is similar to the local production processes (13.1, 13.2, 13.k).

3. Method according to claim 1 or 2, wherein the production process (13.n) is one of the local production processes (13.1, 13.2, 13.k).

4. Method according claim 3, wherein the training is performed using the resulting aggregated central dataset (TD) and the process-specific dataset (PD1, PD2, PDk) of the local process (13.1, 13.2, 13.k) on the local server (12.1, 12.2, 12.k).

5. Method according to any of the preceding claims, wherein the initial central dataset (CD) comprises datapoints of random values or comprises of a dataset (PD1, PD2, PDk) of any of the local production processes (13.1, 13.2, 13.k) or a distilled dataset of a subset of the local production processes (13.1, 13.2, 13.k).

6. Method according to any of the preceding claims, wherein the aggregating is performed by averaging the features and/or labels of all current distilled datasets resulting in the aggregated central dataset.

7. Method according to any of the preceding claims, wherein the feature of the datapoint comprises information of a feature map of an image of the production process (13.1, 13.2, 13.k, 13.n).

8. Method according to any of the preceding claims, wherein the process-specific dataset (PD1, PD2, PDk) of each local production process (13.1, 13.2, 13.k) is private data and the private data is not transferred to the central server (11).

9. Method according to any of the preceding claims, wherein the production processes (13.1, 13.2, 13.k, 13,n) are one of an additive manufacturing process or a milling process, and the classification task is one of anomaly detection, failure classification, condition monitoring of a machine in the production process (13.1, 13.2, 13.k, 13.n), or a quality control, product sorting of the workpiece and/or product manufactured in the production processes (13.1, 13.2, 13.k, 13.n).

10. Computer-Implemented method according to any of the preceding claims, comprising:
- training (S11) the machine learning model (14) to perform the classification task in the production process (13.n) with the aggregated central dataset (TD),
- inputting (S12) datapoints collected during the production process (13.n) into the trained machine learning model (14),
- outputting (S13) a classification result of the production process (13.n) from the trained machine learning model (14) depending on the input datapoints, and
- controlling (S14) the production process (13.n) depending on the classification result.

11. Method according to claim 10, wherein the classification task is one of anomaly detection, failure classification,
condition monitoring of a machine in the production process, or a quality control, product sorting of the workpiece and/or product manufactured in the production processes.

12. System (10) for generating training data to train a machine learning model (14) applied for a classification task in a production process (13.n) for manufacturing at least one workpiece and/or product, comprising a central server (11) and several local servers (12.1, 12.2, 12.k) configured to perform:
a. on the central server (11), generating a central dataset (CD) comprising synthetic datapoints encoding values for a set of features and for a label assigned to each set of features,
wherein each feature of the datapoint is a parameter measured on at least one machine performing the production process (13.1, 13.2, 13.k, 13.n) or a parameter measured on at least one workpiece and/or product manufactured by the production process,
wherein the label indicates a class characterizing the production process or the machine performing the production process, or the workpiece manufactured by the production process at the time the datapoint was recorded,
b. transferring a copy of the central dataset (CD) to the several local servers (12.1, 12.2, 12.k), wherein each local server (12.1, 12.2, 12.k) stores a process-specific dataset (PD1, PD2, PDk) collected at a local production process (13.1, 13.2, 13.k) out of several local production processes, and the collected datasets (PD1, PD2, PDk) of the local production processes having different data distributions,
c. at each of the local servers (12.1, 12.2, 12.k), optimizing the features and/or labels of every datapoint of the copy of the central dataset (DSk) by encoding knowledge contained in its process-specific dataset (PD1, PD2, PDk) into the features and/or labels of every datapoint resulting in a process-specific current distilled dataset,
wherein the optimizing is performed by inputting the process-specific dataset (PD1, PD2, PDk) and the copy of the central dataset (CD) into a dataset distillation algorithm, and
wherein the encoding is performed by inputting the process-specific dataset and the copy of the central dataset (CD) into a dataset distillation algorithm, which outputs the process-specific current distilled dataset,
d. at the central server (11), receiving a copy of the process-specific current distilled datasets from at least a subset of the local servers (12.1, 12.2, 12.k) and aggregating all current distilled datasets into a process-agnostic and distilled aggregated central dataset,
e. iterating the steps b-d by applying the aggregated central dataset as central dataset, until a terminating criterion is met,
wherein the terminating criteria is one of a predefined convergence criterion, a predefined number of iterations, a predefined time limit,
f. providing the resulting aggregated central dataset (TD) as output and using it as input for training the machine learning model (14) for the production process (13.n).

13. Computer program product which, when executed by a system comprising a central server and several local servers, causes the system to perform the method according to any of claims 1-11.

## Patentansprüche

1. Computerimplementiertes Verfahren zum Erzeugen von Trainingsdaten zum Trainieren eines maschinellen Lernmodells (14), das für eine Klassifizierungsaufgabe in einem Produktionsprozess (13.n) zum Herstellen mindestens eines Werkstücks und/oder Produkts verwendet wird, umfassend:
a. auf einem zentralen Server (11): Erzeugen (S1) eines zentralen Datensatzes (CD), der synthetische Datenpunkte umfasst, welche Werte für eine Menge von Merkmalen und für eine jeder Merkmalsmenge zugeordnete Bezeichnung kodieren,
wobei es sich bei dem Merkmal des Datenpunkts um einen Parameter handelt, der an mindestens einer Maschine gemessen wird, die den Produktionsprozess (13.1, 13.2, 13.k, 13.n) durchführt, oder um einen Parameter, der an mindestens einem durch den Produktionsprozess hergestellten Werkstück und/oder Produkt gemessen wird,
wobei die Bezeichnung eine Klasse angibt, die den Produktionsprozess oder die den Produktionsprozess durchführende Maschine oder das durch den Produktionsprozess hergestellte Werkstück zum Zeitpunkt der Aufzeichnung des Datenpunkts kennzeichnet,
b. Übertragen (S2) einer Kopie des zentralen Datensatzes (CD) an mehrere lokale Server (12.1, 12.2, 12.k), wobei jeder lokale Server (12.1, 12.2, 12.k) einen prozessspezifischen Datensatz (PD1, PD2, PDk) speichert, der in einem lokalen Produktionsprozess (13.1, 13.2, 13.k) aus mehreren lokalen Produktionsprozessen erfasst wurde, und wobei die erfassten Datensätze (PD1, PD2, PDk) der lokalen Produktionsprozesse unterschiedliche Datenverteilungen aufweisen,
c. auf jedem der lokalen Server (12.1, 12.2, 12.k): Optimieren (S3) der Merkmale und/oder Bezeichnungen jedes Datenpunkts der Kopie des zentralen Datensatzes (CD), indem Wissen, das in dem jeweiligen prozessspezifischen Datensatz (PD1, PD2, PDk) enthalten ist, in die Merkmale und/oder Bezeichnungen jedes Datenpunkts kodiert wird, wodurch ein prozessspezifischer aktueller destillierter Datensatz erzeugt wird,
wobei das Optimieren durch Eingeben des prozessspezifischen Datensatzes (PD1, PD2, PDk) und der Kopie des zentralen Datensatzes (CD) in einen Datensatz-Destillationsalgorithmus durchgeführt wird, und
wobei das Kodieren durch Eingeben des prozessspezifischen Datensatzesund der Kopie des zentralen Datensatzes (CD) in einen Datensatz-Destillationsalgorithmus durchgeführt wird, der den prozessspezifischen aktuellen destillierten Datensatz ausgibt,
d. auf dem zentralen Server (11): Empfangen (S4) einer Kopie der prozessspezifischen aktuellen destillierten Datensätze von mindestens einer Teilmenge der lokalen Server (12.1, 12.2, 12.k) (12.1., 12.2., 12.k) und Aggregieren sämtlicher aktueller destillierter Datensätze zu einem prozessunabhängigen und destillierten aggregierten zentralen Datensatz,
e. Wiederholen (S5) der Schritte b-d durch Verwenden des destillierten aggregierten zentralen Datensatzes als zentralen Datensatz, bis ein Abbruchkriterium erfüllt ist,
wobei das Abbruchkriterium eines der folgenden ist: ein vordefiniertes Konvergenzkriterium, eine vordefinierte Anzahl von Iterationen oder ein vordefiniertes Zeitlimit, und
f. Bereitstellen (S6) des resultierenden aggregierten zentralen Datensatzes (TD) als Ausgabe und Verwenden dieses aggregierten zentralen Datensatzes als Eingabe für das Trainieren des maschinellen Lernmodells (14) für den Produktionsprozess (13.n).

2. Verfahren nach Anspruch 1, wobei es sich bei dem Produktionsprozess (13.n) um einen neuen Produktionsprozess handelt, der den lokalen Produktionsprozessen (13.1, 13.2, 13.k) ähnlich ist.

3. Verfahren nach einem der Ansprüche 1 oder 2, wobei der Produktionsprozess (13.n) einer der lokalen Produktionsprozesse (13.1, 13.2, 13.k) ist.

4. Verfahren nach Anspruch 3, wobei das Trainieren unter Verwendung des resultierenden aggregierten zentralen Datensatzes (TD) und des prozessspezifischen Datensatzes (PD1, PD2, PDk) des lokalen Prozesses (13.1, 13.2, 13.k) auf dem lokalen Server (12.1, 12.2, 12.k) durchgeführt wird.

5. Verfahren nach einem der vorhergehenden Ansprüche, wobei der anfängliche zentrale Datensatz (CD) Datenpunkte mit zufälligen Werten umfasst oder einen Datensatz (PD1, PD2, PDk) eines der lokalen Produktionsprozesse (13.1, 13.2, 13.k) oder einen destillierten Datensatz einer Teilmenge der lokalen Produktionsprozesse (13.1, 13.2, 13.k) umfasst.

6. Verfahren nach einem der vorhergehenden Ansprüche, wobei das Aggregieren durch Mitteln der Merkmale und/oder der Bezeichnungen aller aktuellen destillierten Datensätze durchgeführt wird, wodurch der aggregierte zentrale Datensatz entsteht.

7. Verfahren nach einem der vorhergehenden Ansprüche, wobei das Merkmal des Datenpunkts Informationen einer Merkmalskarte eines Bildes des Produktionsprozesses (13.1, 13.2, 13.k, 13.n) umfasst.

8. Verfahren nach einem der vorhergehenden Ansprüche, wobei es sich bei dem prozessspezifischen Datensatz (PD1, PD2, PDk) jedes lokalen Produktionsprozesses (13.1, 13.2, 13.k) um vertrauliche Daten handelt und diese vertraulichen Daten nicht an den zentralen Server (11) übertragen werden.

9. Verfahren nach einem der vorhergehenden Ansprüche, wobei es sich bei den Produktionsprozessen (13.1, 13.2, 13.k, 13.n) entweder um einen additiven Fertigungsprozess oder einen Fräsprozess handelt und die Klassifizierungsaufgabe eine von einer Anomalieerkennung, einer Fehlerklassifizierung, einer Zustandsüberwachung einer Maschine im Produktionsprozess (13.1, 13.2, 13.k, 13.n) oder einer Qualitätskontrolle bzw. einer Produktsortierung des Werkstücks und/oder eines in den Produktionsprozessen (13.1, 13.2, 13.k, 13.n) hergestellten Produkts ist.

10. Computerimplementiertes Verfahren nach einem der vorhergehenden Ansprüche, umfassend:
- Trainieren (S11) des maschinellen Lernmodells (14) zum Durchführen der Klassifizierungsaufgabe im Produktionsprozess (13.n) mit dem aggregierten zentralen Datensatz (TD),
- Eingeben (S12) von während des Produktionsprozesses (13.n) erfassten Datenpunkten in das trainierte maschinelle Lernmodell (14),
- Ausgeben (S13) eines Klassifizierungsergebnisses des Produktionsprozesses (13.n) aus dem trainierten maschinellen Lernmodell (14) in Abhängigkeit von den Eingabedatenpunkten, und
- Steuern (S14) des Produktionsprozesses (13.n) in Abhängigkeit von dem Klassifizierungsergebnis.

11. Verfahren nach Anspruch 10, wobei die Klassifizierungsaufgabe eine der folgenden ist:
Anomalieerkennung, Fehlerklassifizierung, Zustandsüberwachung einer Maschine im Produktionsprozess oder Qualitätskontrolle bzw. Produktsortierung des in den Produktionsprozessen hergestellten Werkstücks und/oder Produkts.

12. System (10) zum Erzeugen von Trainingsdaten zum Trainieren eines maschinellen Lernmodells (14), das für eine Klassifizierungsaufgabe in einem Produktionsprozess (13.n) zum Herstellen mindestens eines Werkstücks und/oder Produkts eingesetzt wird, umfassend einen zentralen Server (11) und mehrere lokale Server (12.1, 12.2, 12.k), die dazu eingerichtet sind, Folgendes durchzuführen:
a. auf dem zentralen Server (11): Erzeugen eines zentralen Datensatzes (CD), der synthetische Datenpunkte umfasst, welche Werte für eine Menge von Merkmalen und für eine jeder Merkmalsmenge zugeordnete Bezeichnung kodieren,
wobei jedes Merkmal des Datenpunkts ein Parameter ist, der an mindestens einer den Produktionsprozess (13.1, 13.2, 13.k, 13.n) ausführenden Maschine gemessen wird, oder ein Parameter, der an mindestens einem durch den Produktionsprozess hergestellten Werkstück und/oder Produkt gemessen wird,
wobei die Bezeichnung eine Klasse angibt, die den Produktionsprozess oder die den Produktionsprozess durchführende Maschine oder das durch den Produktionsprozess hergestellte Werkstück zum Zeitpunkt der Aufzeichnung des Datenpunkts kennzeichnet,
b. Übertragen einer Kopie des zentralen Datensatzes (CD) an die mehreren lokalen Server (12.1, 12.2, 12.k), wobei jeder lokale Server (12.1, 12.2, 12.k) einen prozessspezifischen Datensatz (PD1, PD2, PDk) speichert, der in einem lokalen Produktionsprozess (13.1, 13.2, 13.k) aus mehreren lokalen Produktionsprozessen erfasst wurde, und wobei die erfassten Datensätze (PD1, PD2, PDk) der lokalen Produktionsprozesse unterschiedliche Datenverteilungen aufweisen,
c. auf jedem der lokalen Server (12.1, 12.2, 12.k): Optimieren der Merkmale und/oder Bezeichnungen jedes Datenpunkts der Kopie des zentralen Datensatzes (DSk), indem Wissen, das in dem jeweiligen prozessspezifischen Datensatz (PD1, PD2, PDk) enthalten ist, in die Merkmale und/oder Bezeichnungen jedes Datenpunkts kodiert wird, wodurch ein prozessspezifischer aktueller destillierter Datensatz erzeugt wird,
wobei das Optimieren durch Eingeben des prozessspezifischen Datensatzes (PD1, PD2, PDk) und der Kopie des zentralen Datensatzes (CD) in einen Datensatz-Destillationsalgorithmus durchgeführt wird, und
wobei das Kodieren durch Eingeben des prozessspezifischen Datensatzes und der Kopie des zentralen Datensatzes (CD) in einen Datensatz-Destillationsalgorithmus durchgeführt wird, der den prozessspezifischen aktuellen destillierten Datensatz ausgibt,
d. auf dem zentralen Server (11): Empfangen einer Kopie der prozessspezifischen aktuellen destillierten Datensätze von mindestens einer Teilmenge der lokalen Server (12.1, 12.2, 12.k) und Aggregieren sämtlicher aktueller destillierter Datensätze zu einem prozessunabhängigen und destillierten aggregierten zentralen Datensatz,
e. Wiederholen der Schritte b-d durch Verwenden des aggregierten zentralen Datensatzes als zentralen Datensatz, bis ein Abbruchkriterium erfüllt ist,
wobei das Abbruchkriterium eines der folgenden ist: ein vordefiniertes Konvergenzkriterium, eine vordefinierte Anzahl von Iterationen oder ein vordefiniertes Zeitlimit, und
f. Bereitstellen des resultierenden aggregierten zentralen Datensatzes (TD) als Ausgabe und Verwenden dieses aggregierten zentralen Datensatzes ls Eingabe für das Trainieren des maschinellen Lernmodells (14) für den Produktionsprozess (13.n).

13. Computerprogrammprodukt, das, wenn es von einem System, das einen zentralen Server und mehrere lokale Server umfasst, ausgeführt wird, das System veranlasst, das Verfahren gemäß einem der Ansprüche 1 bis 11 durchzuführen.

## Revendications

1. Procédé mis en œuvre par ordinateur pour la génération de données d'entraînement pour entraîner un modèle d'apprentissage automatique (14) utilisé pour une tâche de classification dans un processus de production (13.n) pour la fabrication d'au moins une pièce et/ou un produit, comprenant :
a. sur un serveur central (11), la génération (S1) d'un ensemble de données central (CD) comprenant des points de données synthétiques codant des valeurs pour un ensemble de caractéristiques et pour une étiquette attribuée à chaque ensemble de caractéristiques,
dans lequel la caractéristique du point de données est un paramètre mesuré sur au moins une machine réalisant le processus de production (13.1, 13.2, 13.k, 13.n) ou un paramètre mesuré sur au moins une pièce fabriquée et/ou un produit fabriqué par le processus de production,
dans lequel l'étiquette indique une classe caractérisant le processus de production ou la machine réalisant le processus de production, ou la pièce fabriquée par le processus de production au moment auquel le point de données a été enregistré,
b. le transfert (S2) d'une copie de l'ensemble de données central (CD) à plusieurs serveurs locaux (12.1, 12.2, 12.k), dans lequel chaque serveur local (12.1, 12.2, 12.k) stocke un ensemble de données spécifique à un processus (PD1, PD2, PDk) collecté au niveau d'un processus de production local (13.1, 13.2, 13.k) parmi plusieurs processus de production locaux, et les ensembles de données collectés (PD1, PD2, PDk) des processus de production locaux ayant des distributions de données différentes,
c. au niveau de chacun des serveurs locaux (12.1, 12.2, 12.k), l'optimisation (S3) des caractéristiques et/ou étiquettes de chaque point de données de la copie de l'ensemble de données central (CD) par le codage de connaissances contenues dans son ensemble de données spécifique à un processus (PD1, PD2, PDk) dans les caractéristiques et/ou étiquettes de chaque point de données résultant en un ensemble de données distillé actuel spécifique à un processus,
dans lequel l'optimisation est réalisée par l'entrée de l'ensemble de données spécifique à un processus (PD1, PD2, PDk) et de la copie de l'ensemble de données central (CD) dans un algorithme de distillation d'ensemble de données, et
dans lequel le codage est réalisé par l'entrée de l'ensemble de données spécifique à un processus et de la copie de l'ensemble de données central (CD) dans un algorithme de distillation d'ensemble de données, qui délivre en sortie l'ensemble de données distillé actuel spécifique à un processus,
d. au niveau du serveur central (11), la réception (S4) d'une copie des ensembles de données distillés actuels spécifiques à un processus en provenance d'au moins un sous-ensemble des serveurs locaux (12.1, 12.2, 12.k) et l'agrégation de tous les ensembles de données distillés actuels en un ensemble de données central agrégé indifférent à un processus et distillé,
e. l'itération (S5) des étapes b à d par l'application de l'ensemble de données central agrégé distillé comme ensemble de données central jusqu'à ce qu'un critère de terminaison soit satisfait,
dans lequel le critère de terminaison est l'un parmi un critère de convergence prédéfini, un nombre d'itérations prédéfini, une limite de temps prédéfinie,
f. la fourniture (S6) de l'ensemble de données central agrégé (TD) résultant comme sortie et l'utilisation de celui-ci comme entrée pour l'entraînement du modèle d'apprentissage automatique (14) pour le processus de production (13.n).

2. Procédé selon la revendication 1, dans lequel le processus de production (13.n) est un nouveau processus de production, qui est similaire aux processus de production locaux (13.1, 13.2, 13.k).

3. Procédé selon la revendication 1 ou 2, dans lequel le processus de production (13.n) est l'un des processus de production locaux (13.1, 13.2, 13.k).

4. Procédé selon la revendication 3, dans lequel l'entraînement est réalisé à l'aide de l'ensemble de données central agrégé (TD) résultant et de l'ensemble de données spécifique à un processus (PD1, PD2, PDk) du processus local (13.1, 13.2, 13.k) sur le serveur local (12.1, 12.2, 12.k).

5. Procédé selon l'une quelconque des revendications précédentes, dans lequel l'ensemble de données central (CD) initial comprend des points de données de valeurs aléatoires ou est composé d'un ensemble de données (PD1, PD2, PDk) de l'un quelconque des processus de production locaux (13.1, 13.2, 13.k) ou d'un ensemble de données distillé d'un sous-ensemble des processus de production locaux (13.1, 13.2, 13.k).

6. Procédé selon l'une quelconque des revendications précédentes, dans lequel l'agrégation est réalisée par le calcul de la moyenne des caractéristiques et/ou étiquettes de tous les ensembles de données distillés actuels résultant en l'ensemble de données central agrégé.

7. Procédé selon l'une quelconque des revendications précédentes, dans lequel la caractéristique du point de données comprend des informations d'une carte de caractéristiques d'une image du processus de production (13.1, 13.2, 13.k, 13.n).

8. Procédé selon l'une quelconque des revendications précédentes, dans lequel l'ensemble de données spécifique à un processus (PD1, PD2, PDk) de chaque processus de production local (13.1, 13.2, 13.k) est constitué de données privées et les données privées ne sont pas transférées au serveur central (11).

9. Procédé selon l'une quelconque des revendications précédentes, dans lequel les processus de production (13.1, 13.2, 13.k, 13.n) sont l'un parmi un processus de fabrication additive ou un processus d'usinage, et la tâche de classification est l'une parmi une détection d'anomalie, une classification de panne, une surveillance d'état d'une machine dans le processus de production (13.1, 13.2, 13.k, 13.n), ou un tri des produits de contrôle qualité de la pièce et/ou du produit fabriqué dans les processus de production (13.1, 13.2, 13.k, 13.n).

10. Procédé mis en œuvre ordinateur selon l'une quelconque des revendications précédentes, comprenant :
- l'entraînement (S11) du modèle d'apprentissage automatique (14) pour réaliser la tâche de classification dans le processus de production (13.n) avec l'ensemble de données central agrégé (TD),
- l'entrée (S12) de points de données collectés pendant le processus de production (13.n) dans le modèle d'apprentissage automatique (14) entraîné,
- la sortie (S13) d'un résultat de classification du processus de production (13.n) à partir du modèle d'apprentissage automatique (14) entraîné en fonction des points de données entrés, et
- la commande (S14) du processus de production (13.n) en fonction du résultat de classification.

11. Procédé selon la revendication 10, dans lequel la tâche de classification est l'une parmi une détection d'anomalie, une classification de panne, une surveillance d'état d'une machine dans le processus de production, ou un tri des produits de contrôle qualité de la pièce et/ou du produit fabriqué dans les processus de production.

12. Système (10) pour la génération de données d'entraînement pour entraîner un modèle d'apprentissage automatique (14) appliqué à une tâche de classification dans un processus de production (13.n) pour la fabrication d'au moins une pièce et/ou un produit, comprenant un serveur central (11) et plusieurs serveurs locaux (12.1, 12.2, 12.k) configurés pour réaliser :
a. sur le serveur central (11), la génération d'un ensemble de données central (CD) comprenant des points de données synthétiques codant des valeurs pour un ensemble de caractéristiques et pour une étiquette attribuée à chaque ensemble de caractéristiques,
dans lequel chaque caractéristique du point de données est un paramètre mesuré sur au moins une machine réalisant le processus de production (13.1, 13.2, 13.k, 13.n) ou un paramètre mesuré sur au moins une pièce fabriquée et/ou un produit fabriqué par le processus de production,
dans lequel l'étiquette indique une classe caractérisant le processus de production ou la machine réalisant le processus de production, ou la pièce fabriquée par le processus de production au moment auquel le point de données a été enregistré,
b. le transfert d'une copie de l'ensemble de données central (CD) aux plusieurs serveurs locaux (12.1, 12.2, 12.k), dans lequel chaque serveur local (12.1, 12.2, 12.k) stocke un ensemble de données spécifique à un processus (PD1, PD2, PDk) collecté au niveau d'un processus de production local (13.1, 13.2, 13.k) parmi plusieurs processus de production locaux, et les ensembles de données collectés (PD1, PD2, PDk) des processus de production locaux ayant des distributions de données différentes,
c. au niveau de chacun des serveurs locaux (12.1, 12.2, 12.k), l'optimisation des caractéristiques et/ou étiquettes de chaque point de données de la copie de l'ensemble de données central (CD) par le codage de connaissances contenues dans son ensemble de données spécifique à un processus (PD1, PD2, PDk) dans les caractéristiques et/ou étiquettes de chaque point de données résultant en un ensemble de données distillé actuel spécifique à un processus,
dans lequel l'optimisation est réalisée par l'entrée de l'ensemble de données spécifique à un processus (PD1, PD2, PDk) et de la copie de l'ensemble de données central (CD) dans un algorithme de distillation d'ensemble de données, et
dans lequel le codage est réalisé par l'entrée de l'ensemble de données spécifique à un processus et de la copie de l'ensemble de données central (CD) dans un algorithme de distillation d'ensemble de données, qui délivre en sortie l'ensemble de données distillé actuel spécifique à un processus,
d. au niveau du serveur central (11), la réception d'une copie des ensembles de données distillés actuels spécifiques à un processus en provenance d'au moins un sous-ensemble des serveurs locaux (12.1, 12.2, 12.k) et l'agrégation de tous les ensembles de données distillés actuels en un ensemble de données central agrégé indifférent à un processus et distillé,
e. l'itération des étapes b à d par l'application de l'ensemble de données central agrégé comme ensemble de données central, jusqu'à ce qu'un critère de terminaison soit satisfait,
dans lequel le critère de terminaison est l'un parmi un critère de convergence prédéfini, un nombre d'itérations prédéfini, une limite de temps prédéfinie,
f. la fourniture de l'ensemble de données central agrégé (TD) résultant comme sortie et l'utilisation de celui-ci comme entrée pour l'entraînement du modèle d'apprentissage automatique (14) pour le processus de production (13.n).

13. Produit de programme informatique qui, lors de son exécution par un système comprenant un serveur central et plusieurs serveurs locaux, amène le système à réaliser le procédé selon l'une quelconque des revendications 1 à 11.
